# EUROPEAN PATENT APPLICATION

(11) **EP 4 276 362 A1**
(43) Date of publication of application: **15.11.2023**
(21) Application number: 22173058.3
(22) Date of filing: 12.05.2022
(51) Int. Cl.: F24C 15/10, A47J 43/046

(54) **COOKING APPLIANCE**

(71) Applicant: ELECTROLUX APPLIANCES AKTIEBOLAG, 105 45 Stockholm (SE)
(72) Inventor: NEUKAMM, Alwin, 91541 Rothenburg ob der Tauber (DE); LEIKAM, Juergen, 91541 Rothenburg ob der Tauber (DE); WALTHER, Christoph, 91541 Rothenburg ob der Tauber (DE)
(74) Representative: Electrolux Group Patents

(57) **Abstract**

The present invention concerns a cooking appliance (12), which comprising at least one food treatment area. According to the invention, a kitchen machine (62) or a food processor, in particular a cooking food processor, is included in the cooking appliance (12). Alternatively, the cooking appliance (12) provides a space for including the kitchen machine (62) or food processor and/or a connection to an energy supply for energizing the kitchen machine (62) or food processor.

## Description

The present invention relates to a cooking appliance comprising at least one food treatment area according to the preamble of claim 1.

In order to perform cooking activities, either in a domestic or professional environment, cooking appliances are used for the preparation of food in or on specific food treatment areas in order to prepare dishes or meals. Cooking processes are particularly performed on cooking hobs, which comprise cooking zones for placement of cookware receiving the food to be cooked. The cooking zones are generally arranged on a cooktop, in particular a glass ceramic cooktop, which forms an upper wall of the cooking hob. Moreover, there are cooking hobs with integrated devices known, which devices are configured to support the food preparing user of the appliance during the preparation of the food prior to the cooking process, such as a scale device, e. g. for weighing ingredients of a meal. Further, there are cooking hobs known, in which a cooking fumes extraction functionality is integrated. More specifically, such kind of a combination appliance comprises a cooking hob and an integrated downdraft extraction device with an extraction opening in the cooktop of the cooking hob. With such integration of devices that are not closely involved in the cooking process as such, solutions are provided, in which functionalities and related units, which are anyway required in a kitchen environment, are implemented in a cooking appliance, thereby providing a compact solution allowing to free up space in the kitchen, which would have been normally occupied by such kind of functionalities and related units.

It is an object of the present invention to provide a cooking appliance with at least one food treatment area, in particular a cooking hob with at least one cooking zone, which even further frees up space in a kitchen environment, particularly for an additional or an alternative functionality and a respective unit.

The object is achieved for a cooking appliance comprising at least one food treatment area, i. e. a cooking appliance according to the preamble of claim 1, by the characterizing features of claim 1.

A cooking appliance comprising at least one food treatment area, in particular a cooking hob comprising at least one cooking zone, is provided. According to the present invention, a kitchen machine or a food processor, in particular a cooking food processor, is included in the cooking appliance. As an alternative to such inclusion, specifically a fixed and/or permanent inclusion, the cooking appliance just provides a space for including the kitchen machine or food processor and/or a connection to an energy supply for energizing the kitchen machine or food processor. By means of a cooking appliance including a kitchen machine or food processor, or by the cooking appliance providing a space for including the kitchen machine and/or a connection to an energy supply for energizing the kitchen machine or food processor a cooking appliance is created, which includes a functionality, and particularly a kitchen device, so that the space, which the functionality and/or the kitchen device otherwise takes up elsewhere in the kitchen environment, is freed up, particularly for an additional work space.

According to an embodiment, a dedicated area in or on the cooking appliance is provided for the arrangement of the kitchen machine or food processor. Preferably, an area or zone that is used in a conventional cooking appliance for a standard cooking process is reserved for the arrangement of the kitchen machine or food processor. Said dedicated area may be a permanently assigned zone on a cooking surface of a cooking hob. In the specific case of a conventional cooking hob, normally the cooking surface, particularly the cooktop, is partitioned into four or five sections for an arrangement of the respective number of cooking zones. According to the specific solution, one of these sections may be reserved for the kitchen machine or food processor, while on the other sections the respectively reduced number of cooking zones may be retained.

In some implementations, the kitchen machine or food processor is configured to perform at least one of the food processing methods stirring, mixing, kneading, cutting, mincing, weighing, warming, cooking, steaming, steam cooking, browning or caramelizing. Such kind of food processing methods may be available and used in an isolated manner, but preferably quite a number of these methods are available in order to condense as many functionalities as possible in one unit, and moreover, implemented in a kitchen appliance commonly existing in kitchens, more specifically domestic kitchens.

Moreover, the kitchen machine or food processor may comprise a cutting device, which is in particular a fly cutter, and/or a driving unit, in particular a motor, and/or a weighing device, and/or a heating unit, and/or a food receiving and/or processing container. Said food receiving and/or processing container may be a mixing bowl, and it is preferably detachable from the kitchen machine or food processor. The weighing device is in particular a scale. With these components, an entire preparation of complete meal is possible, starting from initial adding of ingredients up to finalization of the meal.

According to an embodiment, a control unit and/or a user interface, is/are included in the cooking appliance for operating the kitchen machine or food processor. Preferably, the control unit and/or user interface uses thin film transistor (TFT) technology, and, more preferably, a touchscreen display is included. Furthermore, the control unit and/or the user interface may form an integrated unit/form integrated units with a control unit and/or a user interface for the food treatment area, in particular for the at least one cooking zone. With such integration in one unit, the user's focus on only one user interface may simplify the operation of all functionalities of the appliance. Moreover, such condensation of all functionalities in one unit may free up space inside of the combination appliance, in particular inside of the cooking hob, so that the saved space may be used e. g. for increasing the cooking area.

One specific solution for the cooking appliance according to the present invention provides that the position of at least a part of the kitchen machine or food processor is modifiable. Preferably, a modification of the position of the entire kitchen machine or food processor unit is enabled. More specifically, the height level of at least a part of the kitchen machine or food processor is conceived to be changeable. Such a modification of the height level may allow the user to adapt the kitchen machine to an optimized operating height.

According to a particularly specific embodiment, the kitchen machine or food processor is at least partially arranged on a cooking surface, in particular on a cooktop of a cooking hob. At least a part of the kitchen machine or food processor is retractable. Such retraction preferably allows the user to establish an at least approximately flat surface of the cooking surface when the kitchen machine or food processor is not operated. That way, the kitchen machine will not impede the user in performing other activities on the cooktop, in particular normal cooking on the cooking zones.

In some implementations, the cooking appliance, or particularly the kitchen machine or food processor, comprises a motor for a motor-driven position modification of the at least a part of the kitchen machine or food processor. Said motor is preferably an actuating motor for a targeted control of the part of or of the entire kitchen machine or food processor. As an alternative, a mechanical adjusting unit either for a manual position modification may be implemented.

According to embodiments, a cut-out is included in a top plate of the cooking appliance, in particular in a cooktop of the cooking hob. The cut-out forms an installation opening or a receiving opening for at least a part of the kitchen machine or food processor, in particular for at least the food receiving and/or processing container.

A particularly preferred solution of the present invention is characterized by a cooking appliance, which further comprises or accommodates an extraction device for a removal of cooking fumes from a cooking area, in particular from a cooking zone of a cooking hob. The extraction device is preferably configured to aspirate fumes arising during an operation of the kitchen machine or food processor. Due to the space, especially in the height axis, needed for the extraction device, a respective space for the height adjustment of the kitchen device or food processor is automatically made available.

In some implementations, an installation opening, particularly the cut-out, of the kitchen machine or food processor is at the same level as an installation opening of the extraction device. Preferably, at least one of the installation openings of the kitchen machine or food processor and of the extraction device, more preferably both installation openings, are arranged in a top plate of the cooking appliance, in particular in a cooktop of the cooking hob.

According to a specific embodiment, the construction height and/or the installation depth of the kitchen machine or food processor is/are aligned with the construction height and/or the installation depth of the extraction device. Consequently, in height axis no exceptional installation room in kitchen cabinet is required.

In some implementations, the kitchen machine or food processor takes up the space of at most one food treatment area, so that the number of the food treatment areas of the cooking appliance is reduced by not more than one food treatment area compared with a conventional cooking appliance with the same or with similar structure, particularly with the same or with similar outside dimensions. In case of the cooking appliance being a cooking hob, the kitchen machine or food processor may take up the space of at most one cooking zone on the cooktop of the cooking hob.

One specific solution according to the present invention is characterized in that a scale device is integrated in a top plate of the cooking appliance, in particular in a cooktop of the cooking hob. The scale device may be arranged in the top plate side-by-side with the kitchen machine or food processor. More specifically, the scale device is integrated in or allocated to a cooking zone of the cooking hob.

Moreover, it may be provided that a casing of the kitchen machine or food processor, particularly an upper part, more specifically a top section or a top frame of the upper part, of the casing of the kitchen machine or food processor, is fixed to the top plate of the cooking appliance. The casing may house a main body of the kitchen machine or food processor. The fixation is particularly performed on a bottom surface of the top plate. A preferred embodiment of fixation is glueing.

Moreover, a lower part of the casing may be fixed to the upper part by screwing, so that upper and lower parts, when taken together, form the entire casing.

Novel and inventive features of the present invention are set forth in the appended claims.

The present invention will be described in further detail with reference to the drawings, in which
- Fig. 1: is a perspective view of a combination appliance comprising a cooking hob and a downdraft extraction device installed in a kitchen cabinet;
- Fig. 2: is a cross-sectional perspective view of the disassembled combination appliance of Fig. 1 with a frontal surface cut away and including a removable filter device;
- Fig. 3: is a top perspective view of a combination appliance following the structure of Figs. 1 and 2, with a cooking zone being replaced by a kitchen machine;
- Fig. 4: is the combination appliance of Fig. 3 with the kitchen machine in a resting position; and
- Fig. 5: is a bottom perspective view of the combination appliance of Figs. 3 and 4.

In all figures the same or equivalent part are marked with the same reference numbers.

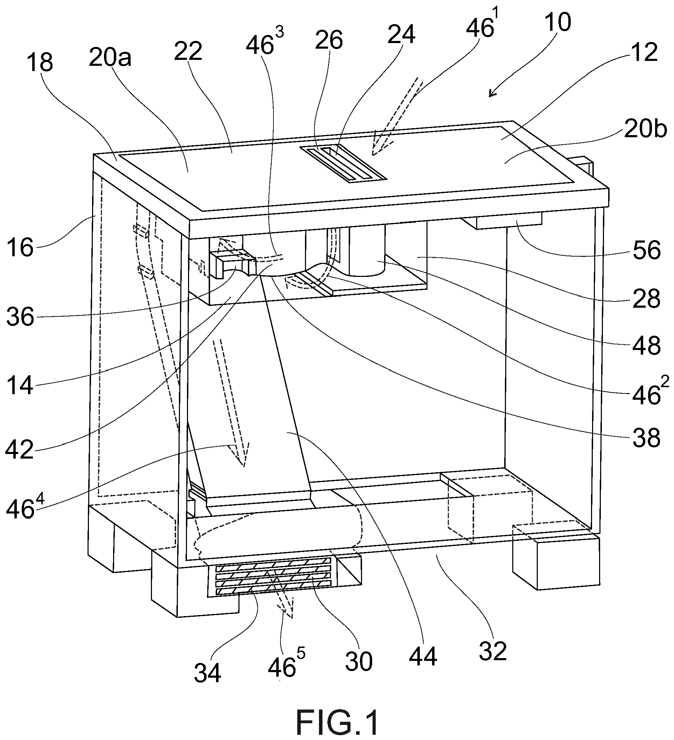

Fig. 1 illustrates a general setup of a standard combination appliance 10 comprising a cooking hob 12 and a downdraft extraction device 14 installed in a kitchen cabinet 16. The cooking hob 12 is implemented in a cut-out of a kitchen countertop 18 forming a top cover plate of the kitchen cabinet 16. The downdraft extraction device 14 is configured to take away cooking vapours occurring during cooking processes, in particular when cooking with uncovered cookware. The cooking hob 12 comprises cooking regions 20a, 20b arranged on a left half and a right half of a cooktop 22 of the cooking hob 12, which left and right halves are separated from each other by a suction opening 24 for an intake of the cooking vapours, the suction opening 24 being arranged alongside a cooktop centreline. The suction opening 24 is covered by a cover grid 26 for preventing items, e. g. cookware, to fall into the suction opening 24. Instead of the cover grid 26 a lid may be used for entirely covering the suction opening when the extraction device 14 is out of use, but for the operation of the extraction device 14 the lid is pivotable into an upright open position.

A housing 28 of the extraction device 14 is shown in Fig. 1 in transparent illustration. Said housing 28 provides a closed outer shell or channel segment for a flow of the sucked-in cooking vapours on their way from the suction opening 24 to an exhaust opening 30 in a base area 32 of the kitchen cabinet 16. Said exhaust opening 30 is also covered, namely by an outlet grille 34.

The flow of the sucked-in cooking vapours through the extraction device 14 is driven by the operation of an extraction fan 36 arranged inside of the housing 28. Said extraction fan 36 comprises a bottom-sided intake opening 38 for sucking the cooking vapours from the interior space of the housing 28.

A rear-sided fan outlet is arranged for a horizontal exit of the air blown out backwards from the extraction fan housing 42. The fan outlet is connected to a first end of an air duct 44 designed as a rectangular tube and forms a second channel arranged downstream the above-mentioned first channel. Directly at the passage from the fan outlet to the air duct 44, an air duct bending by 90 degrees is implemented, which redirects the air flow from horizontal to vertical downwards. The air duct 44 may be guided alongside a rear side of the kitchen cabinet 16 and may be bent again by 90 degrees close to a rear lower edge of the kitchen cabinet 16 in order to direct the airflow towards exhaust opening 30 in the base area 32 of the kitchen cabinet 16. Accordingly, the second end of the air duct 44 is connected to the exhaust opening 30. The embodiment illustrated in Fig. 1 shows a solution of the air duct 44 with an inclined section of its downwardly directed portion, directed slightly to the right. Naturally, a solution with said portion arranged in an exact vertical direction is considerable as well.

The course of the cooking vapours from the cooking area through the extraction device 14 to a re-entry into ambient air is illustrated in Fig. 1 by dotted arrows 46¹ to 46⁵. On their way through the extraction device 14, the cooking vapours pass through a filter assembly 48, which is arranged downstream directly behind the suction opening 24 for providing a purification of the conveyed air. Said filter assembly 48 includes a filter carrier 50 supporting a filter element (not shown) that is usually configured for filtering out grease particles and droplets.

The structure of the combination appliance 10 with the air duct 44 inside of the kitchen cabinet 16 and the exhaust opening 30 on the front of the cabinet 16 as shown in Fig. 1 is only one installation option. In other exemplary installations, the illustrated air duct 44 may be replaced by a direct blow-out opening at the cabinet rear side through an opening in the rear-sided cabinet wall or by an air channel guided through a wall of the installation location of the combination appliance 10, e. g. for an air exhaust outdoors.

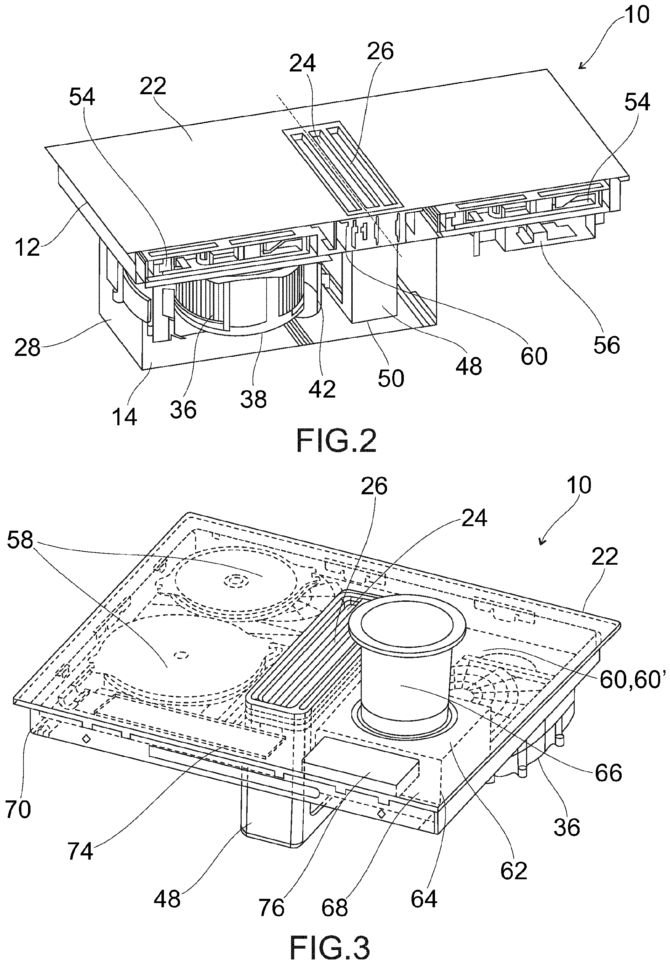

The cross-sectional view of Fig. 2 further shows two power boards 54, one for the left cooking region 20a and one for the right cooking region 20b, the power boards 54 providing cooking zones in the left and right cooking regions 20a, 20b with electrical power. In the present embodiment, the cooking hob 12 is an induction cooking hob and the cooking zones are defined by induction coils 58 that are arranged below the cooktop 22 of the cooking hob 12. Attached to the bottom side of the power board 54 assigned to the right cooking region 20b, a further circuit board is arranged forming a control electronics 56 for the combination appliance 10.

The combination appliance embodiment 10 according to Figs. 3 to 5 generally differs from the setup of the combination appliance 10 according to Figs. 1 and 2 in that in addition to the cooking function performed by the cooking zones in the cooking regions 20a, 20b and the cooking fumes extraction function performed by the downdraft extraction device 14 an overall food preparing functionality is integrated in the entire appliance. Said overall food preparing functionality is embodied in a kitchen machine 62, which is configured to perform a plurality of food processing and preparation methods like stirring, mixing, kneading, cutting, mincing, weighing, warming, cooking, steaming, steam cooking, browning and/or caramelizing.

The combination appliance 10 is presented in Figs. 3 to 5 in a transparent view in order to allow a deeper insight. Further, for a better understanding of the appliance structure and the components relevant to the present invention, some elements of the extraction device 14 have been omitted, but rather only the filter assembly 48, the suction opening 24, the cover grid 26 and the extraction fan 36 are the illustrated components of the extraction device 14 in Figs. 3 to 5.

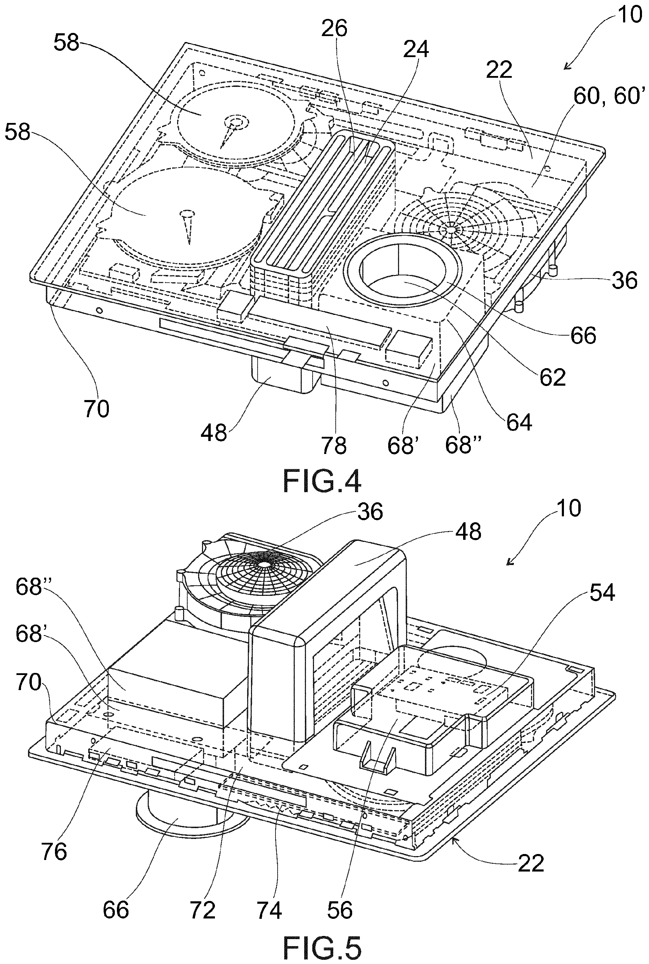

The transparent view of Figs. 3 and 4 illustrate the arrangement of the induction coils 58 below the cooktop 22, which may be a glass ceramic plate. In these figures only two induction coils 58 defining two cooking zones, respectively, are shown on the cooking regions 20a arranged on the left half of the cooktop 22 of the cooking hob 12. However, a third cooking zone 60 may be arranged at a rear area of the right half of the cooktop 22. As an alternative to the third cooking zone 60, the right rear area may comprise a weighing zone 60' configured to receive a container for taking up food ingredients to be weighed during preparatory steps prior to the cooking process. A more advanced alternative, however, may provide for a combined zone on this area, the combined cooking zone including both a cooking and weighing function, so that e. g. during preparatory steps the right rear area is operable as a weighing zone 60', and is operable during the cooking process as a third cooking zone 60. Said weighing zone 60' may particularly be favourable, when the previously mentioned kitchen machine 62 does not include a weighing function, or for providing an additional weighing opportunity, e. g. for large-sized food items.

The fourth zone of the cooking hob 12 of the combination appliance 10, which is situated at a front area of the right half of the cooktop 22, is occupied by the kitchen machine 62, which includes a main body 64 and a food container 66 that is detachable from the main body 64 for filling and emptying and specifically when the kitchen machine 62 is not operated, but in a standby mode instead. Alternatively, the kitchen machine 62 may be designed in that it is entirely, i. e. inclusively with the food container 66, retractable into the combination appliance 10 in the standby mode, so that an upper edge of the food container 66 is flush with the upper surface of the cooktop 22, as is illustrated by Fig. 4.

A second cut-out, besides the first cut-out required for the suction opening 24, is arranged in the cooktop 22 for the implementation of the kitchen machine 62. The main body 64 of the kitchen machine 62 comprises a casing 68, which is designed in two parts including an upper part 68' and a lower part 68". The upper part 68' is attached to, preferably glued on, the bottom side of the cooktop 22, while the lower part 68" is connected to the upper part 68' by means of screws. The upper part 68' is entirely enclosed by a housing 70 of the cooking hob 12, while the lower part 68" is attached to a bottom side of the housing 70, so that a hob bottom wall 72 of the housing 70 forms a parting plane for upper and lower parts 68', 68" of the casing 68.

Within the casing 68 all components for operating the kitchen machine 62 are embedded, including a motor with drive shaft, a heating element, sensor means, electronic components and electric connection to mains supply and to a user interface for operating the kitchen machine 62.

According to Figs. 3 and 5, a first user interface 74 for the operation, in particular for user inputs, of the cooking hob 12 is arranged next to a left front edge of the cooktop 22, which user interface 74 may also include a user interface function for the extraction device 14 and/or a user interface function for the weighing zone 60'. Further, a second user interface 76 is arranged next to a front right edge of the cooktop 22, which is intended to solely operate the kitchen machine 62. Alternatively, the operation, in particular user inputs, of the weighing zone 60' and/or of the extraction device 14 may be performable by the second user interface 76 instead of being allocated to the first user interface 74. Yet another option, however, provides for a common user interface 78 for all functions and units of the combination appliance 10, as is illustrated by Fig. 4.

Finally, although a combination appliance 10 with specific dimensions is presented by Figs. 1 to 5, the herein described setups of combination appliance 10 may be applicable to all known sizes of cooking hobs 12 and respective combination appliances 10 with a width of at least 580 mm. In combination with the kitchen machine 62 occupying one operating area of the cooktop 22, two, three or four cooking zones may be provided, specifically depending on the size of the cooking hob 12.

Although illustrative embodiments of the present invention have been described herein with reference to the accompanying drawings, it is to be understood that the present invention is not limited to these precise embodiments, and that various other changes and modifications may be affected therein by one skilled in the art without departing from the scope or spirit of the invention. All such changes and modifications are intended to be included within the scope of the invention as defined by the appended claims.

Moreover, features which are described in the context of separate aspects and embodiments of the invention may be used together and/or be interchangeable. Similarly, features described in the context of a single embodiment may also be provided separately or in any suitable sub-combination.

### List of reference numerals

- 10: combination appliance
- 12: cooking hob
- 14: downdraft extraction device
- 16: kitchen cabinet
- 18: kitchen countertop
- 20a, 20b: cooking regions
- 22: cooktop
- 24: suction opening
- 26: cover grid
- 28: extraction device housing
- 30: exhaust opening
- 32: base area
- 34: outlet grille
- 36: extraction fan
- 38: intake opening
- 42: fan housing
- 44: air duct
- 46^{1 to 5}: arrows indicating air flow
- 48: filter assembly
- 50: filter carrier
- 54: power boards
- 56: control electronics
- 58: induction coils
- 60: third cooking zone
- 60': weighing zone
- 62: kitchen machine
- 64: main body
- 66: food container
- 68: casing
- 68': upper part
- 68": lower part
- 70: hob housing
- 72: hob bottom wall
- 74: first user interface
- 76: second user interface
- 78: common user interface

## Claims

1. A cooking appliance (12) comprising at least one food treatment area, in particular a cooking hob (12) comprising at least one cooking zone,
**characterized in that**
- a kitchen machine (62) or a food processor, in particular a cooking food processor, is included in the cooking appliance (12),
or
- the cooking appliance (12) provides a space for including the kitchen machine (62) or food processor and/or a connection to an energy supply for energizing the kitchen machine (62) or food processor.

2. The cooking appliance (12) according to claim 1,
**characterized in that**
a dedicated area in or of the cooking appliance (12), in particular a permanently assigned zone on a cooking surface (22) of a cooking hob (12), is provided for the arrangement of the kitchen machine (62) or food processor, preferably an area or zone that is used in a conventional cooking appliance (12) for a standard cooking process is reserved for the arrangement of the kitchen machine (62) or food processor.

3. The cooking appliance (12) according to claim 1 or 2,
**characterized in that**
the kitchen machine (62) or food processor is configured to perform at least one of the food processing methods
- stirring
- mixing
- kneading
- cutting
- mincing
- weighing
- warming
- cooking
- steaming
- steam cooking
- browning
- caramelizing.

4. The cooking appliance (12) according to anyone of the preceding claims,
**characterized in that**
the kitchen machine (62) or food processor comprises at least one of the components or devices
- a cutting device, in particular a fly cutter
- a driving unit, in particular a motor
- a weighing device, in particular a scale
- a heating unit
- a food receiving and/or processing container (66), in particular a mixing bowl, which is preferably detachable from the kitchen machine or food processor.

5. The cooking appliance (12) according to anyone of the preceding claims,
**characterized in that**
a control unit and/or a user interface (76, 78), preferably using thin film transistor (TFT) technology, more preferably including a touchscreen display, is/are included in the cooking appliance (12) for operating the kitchen machine (62) or food processor, wherein the control unit and/or the user interface (76, 78) in particular forms an integrated unit/form integrated units with a control unit and/or a user interface (74) for the food treatment area, in particular for the at least one cooking zone.

6. The cooking appliance (12) according to anyone of the preceding claims,
**characterized in that**
the position, in particular the height level, of at least a part of the kitchen machine (62) or food processor, preferably of the entire kitchen machine (62) or food processor unit, is modifiable.

7. The cooking appliance (12) according to claim 6,
**characterized in that**
the kitchen machine (62) or food processor is at least partially arranged on a cooking surface (22), in particular on a cooktop (22) of a cooking hob (12), wherein at least a part of the kitchen machine (62) or food processor is retractable, preferably by establishing an at least approximately flat surface of the cooking surface (22) when the kitchen machine (62) or food processor is not operated.

8. The cooking appliance (12) according to claim 6 or 7,
**characterized in that**
the cooking appliance (12), in particular the kitchen machine (62) or food processor, comprises a motor, preferably an actuating motor, or a mechanical adjusting unit for the position modification of the at least a part of the kitchen machine (62) or food processor.

9. The cooking appliance (12) according to anyone of the preceding claims,
**characterized in that**
a cut-out is included in a top plate (22) of the cooking appliance (12), in particular in a cooktop (22) of the cooking hob (12), the cut-out forming an installation opening or a receiving opening for at least a part of the kitchen machine (62) or food processor, in particular for at least the food receiving and/or processing container (66).

10. The cooking appliance (12) according to anyone of the preceding claims,
**characterized in that**
the cooking appliance (12) further comprises or accommodates an extraction device (14) for a removal of cooking fumes from a cooking area, in particular from a cooking zone of a cooking hob (12), the extraction device (14) preferably being configured to aspirate fumes arising during an operation of the kitchen machine (62) or food processor.

11. The cooking appliance (12) according to claim 10,
**characterized in that**
an installation opening of the kitchen machine (62) or food processor is at the same level as an installation opening of the extraction device (14), wherein preferably at least one of the installation openings of the kitchen machine (62) or food processor and of the extraction device (14), more preferably both installation openings, are arranged in a top plate (22) of the cooking appliance (12), in particular in a cooktop (22) of the cooking hob (12).

12. The cooking appliance (12) according to claim 10 or 11,
**characterized in that**
the construction height and/or the installation depth of the kitchen machine (62) or food processor is/are aligned with the construction height and/or the installation depth of the extraction device (14).

13. The cooking appliance (12) according to anyone of the preceding claims,
**characterized in that**
the kitchen machine (62) or food processor takes up the space of at most one food treatment area, in particular of at most one cooking zone on a cooktop (22) of the cooking hob (12), so that the number of the food treatment areas of the cooking appliance (12) is reduced by not more than one food treatment area compared with a conventional cooking appliance (12) with the same or with similar structure, particularly with the same or with similar outside dimensions.

14. The cooking appliance (12) according to anyone of the preceding claims,
**characterized in that**
a scale device (60') is integrated in a top plate (22) of the cooking appliance (12), in particular in a cooktop (22) of the cooking hob (12), the scale device (60') particularly being arranged in the top plate (22) side-by-side with the kitchen machine (62) or food processor, the scale device (60') more particularly being integrated in or allocated to a cooking zone of the cooking hob (12).

15. The cooking appliance (12) according to anyone of the preceding claims,
**characterized in that**
an upper part (68'), in particular a top section or a top frame of the upper part (68'), of a casing (62) of the kitchen machine (62) or food processor is fixed to, preferably glued on, a top plate (22), particularly on a bottom surface of the top plate (22), of the cooking appliance (12).
